# EUROPEAN PATENT APPLICATION

(11) **EP 2 753 030 A1**
(43) Date of publication of application: **09.07.2014**
(21) Application number: 12867162.5
(22) Date of filing: 03.02.2012
(51) Int. Cl.: H04L 12/70

(54) **FLOW IDENTIFICATION METHOD, DEVICE, AND SYSTEM**

(71) Applicant: Huawei Technologies Co., Ltd., Shenzhen, Guangdong 518129 (CN)
(72) Inventor: ZHOU, Wei, Shenzhen Guangdong 518129 (CN)
(74) Representative: Haley, Stephen
(86) International application number: PCT/CN2012/070878
(87) International publication number: WO 2013/113171

(57) **Abstract**

The present invention discloses a flow identification method, device, and system. In the system for implementing the flow identification method, a switching device acquires an enhanced flow table entry matching tunnel encapsulation, where the enhanced flow table entry matching the tunnel encapsulation includes an identifier of the tunnel encapsulation and a flow-table-field matching the tunnel encapsulation; and the switching device identifies, according to the enhanced flow table entry matching the tunnel encapsulation, a data packet that has undergone tunnel encapsulation processing. By adopting the technical solutions disclosed in the present invention, packet content that has undergone the tunnel encapsulation processing and is in the data packet may be identified.

## Description

### FIELD OF THE INVENTION

The present invention relates to the field of communications, and in particular, to a flow identification technology.

### BACKGROUND OF THE INVENTION

In an open flow (OpenFlow in English) protocol, a packet forwarding process originally controlled by a switch/router totally is completed by a switching device (hereinafter referred to as switching device) that supports the OpenFlow protocol and a controller (hereinafter referred to as controller) that uses the OpenFlow protocol together, so as to implement separation of data forwarding and routing control. The controller controls a flow table in the switching device through the OpenFlow protocol, so as to achieve a purpose of controlling the data forwarding.

After a data packet has undergone tunnel encapsulation technology processing, in definitions of an existing OpenFlow protocol and flow table, the switching device and the controller both cannot identify content information that has undergone tunnel encapsulation and is in the data packet, so that forwarding or other operations cannot be executed on this kind of data packet that has undergone tunnel encapsulation processing.

### SUMMARY OF THE INVENTION

Embodiments of the present invention provide a flow identification method, device, and system.

In one aspect, a flow identification method is provided, where the method includes:
acquiring, by a switching device, an enhanced flow table entry matching tunnel encapsulation, where the enhanced flow table entry matching the tunnel encapsulation includes an identifier of the tunnel encapsulation and a flow-table-field matching the tunnel encapsulation; and
identifying, by the switching device, according to the enhanced flow table entry matching the tunnel encapsulation, a data packet that has undergone tunnel encapsulation processing.

By applying the foregoing technical solution, a switching device may be enabled to identify packet content that has undergone tunnel encapsulation and is in a data packet after the data packet has undergone tunnel encapsulation processing.

In another aspect, a flow identification method is provided, where the method includes:
receiving, by a controller, a data packet that has undergone tunnel encapsulation processing;
allocating, by the controller, according to the data packet that has undergone the tunnel encapsulation processing, an enhanced flow table entry matching the tunnel encapsulation, where the enhanced flow table entry matching the tunnel encapsulation includes an identifier of the tunnel encapsulation and a flow-table-field matching the tunnel encapsulation; and
sending, by the controller, the enhanced flow table entry matching the tunnel encapsulation to a switching device.

By applying the foregoing technical solution, a switching device may be enabled to identify packet content that has undergone tunnel encapsulation and is in a data packet after the data packet has undergone tunnel encapsulation processing.

In another aspect, a switching device is provided, where the switching device includes:
an acquiring unit, configured to acquire an enhanced flow table entry matching tunnel encapsulation, where the enhanced flow table entry matching the tunnel encapsulation includes an identifier of the tunnel encapsulation and a flow-table-field matching the tunnel encapsulation; and
an identifying unit, configured to identify, according to the enhanced flow table entry matching the tunnel encapsulation, a data packet that has undergone tunnel encapsulation processing.

By applying the foregoing technical solution, a switching device may be enabled to identify packet content that has undergone tunnel encapsulation and is in a data packet after the data packet has undergone tunnel encapsulation processing.

In another aspect, a controller is provided, where the controller includes:
a receiver, configured to receive a data packet that has undergone tunnel encapsulation processing and is sent by a switching device;
a processor, configured to allocate, according to the data packet that has undergone the tunnel encapsulation processing, an enhanced flow table entry matching the tunnel encapsulation, where the enhanced flow table entry matching the tunnel encapsulation includes an identifier of the tunnel encapsulation and a flow-table-field matching the tunnel encapsulation; and
a transmitter, configured to send the enhanced flow table entry matching the tunnel encapsulation to the switching device.

By applying the foregoing controller, a switching device may be enabled to identify packet content that has undergone tunnel encapsulation and is in a data packet after the data packet has undergone tunnel encapsulation processing.

In another aspect, a system for implementing flow identification is provided, where the system includes: the foregoing switching device and the foregoing controller. The system executes a flow identification method provided by an embodiment of the present invention, and may implement identification of a data packet that has undergone tunnel encapsulation processing.

In another aspect, a computer program product is provided, where the computer program product includes a storage medium, and the storage medium stores codes of the foregoing flow identification method. By applying the computer program product, the flow identification method may be implemented, so as to implement identification of a data packet that has undergone tunnel encapsulation processing.

### BRIEF DESCRIPTION OF THE DRAWINGS

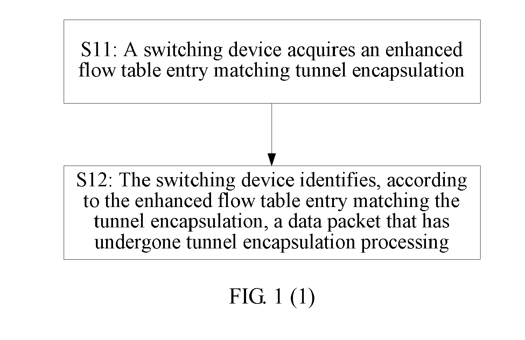

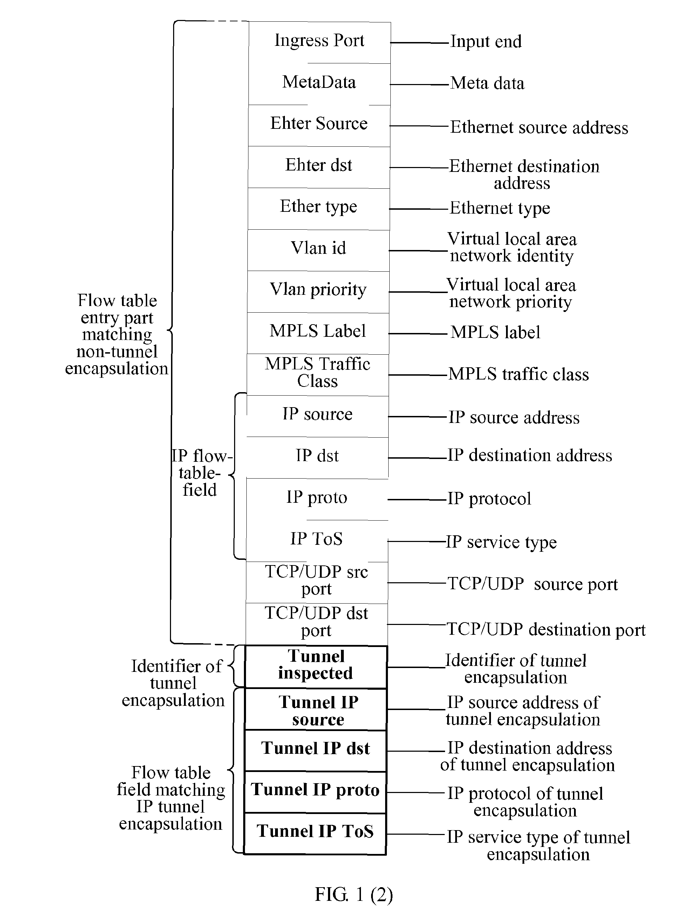

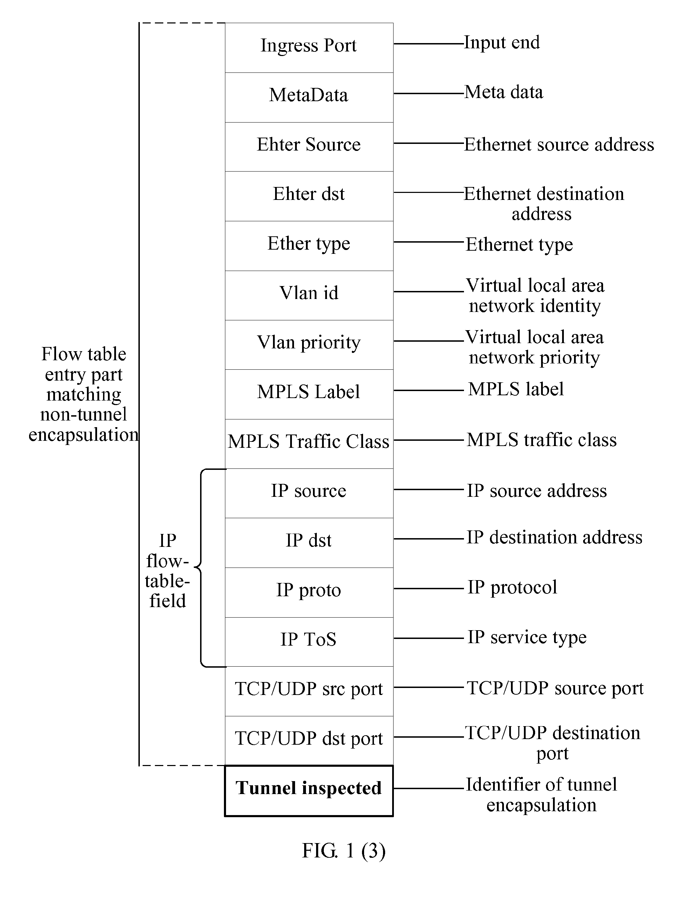

FIG. 1 (1) is a schematic flow chart of a flow identification method according to Embodiment 1 of the present invention;
FIG. 1 (2) to FIG. 1 (3) are schematic diagrams of implementation manners of an enhanced flow table entry according to Embodiment 1 of the present invention;
FIG. 2 is a schematic flow chart of a flow identification method according to Embodiment 2 of the present invention;
FIG. 3 (1) to FIG. 3 (2) are schematic flow charts of a flow identification method according to Embodiment 3 of the present invention;
FIG. 4 is a schematic flow chart of a flow identification method according to Embodiment 4 of the present invention;
FIG. 5 (1) to FIG. 5 (2) are a schematic structural diagram of a switching device according to Embodiment 4 of the present invention; and
FIG. 6 is a schematic structural diagram of a controller according to Embodiment 5 of the present invention.

### DETAILED DESCRIPTION OF THE EMBODIMENTS

A switching device that supports an OpenFlow protocol includes at least three parts: (1) a flow table and an operation defined in each flow table entry included in the flow table, used to instruct the switching device how to process a received data packet, for example, forwarding the data packet to a port, forwarding the data packet to a controller, or discarding the data packet; (2) a secure channel, used to connect a remote control process (or referred to as a controller) and the switching device, and allow command and data packets to transmit in the controller and the switching device; and (3) the OpenFlow protocol, providing an open and standard communication manner for the controller and the switching device.

When the switching device receives a data packet, the switching device compares the received data packet with a flow table. If the switching device acquires a flow table entry matching the data packet, the switching device executes an operation (for example, forwarding the data packet to a specific port) defined in the flow table entry. If the switching device does not acquire a matched flow table entry, the switching device forwards the data packet to the controller, and the controller decides how to process these data packets that do not match flow table entries. After a data packet has undergone tunnel encapsulation technology processing, in definitions of an existing OpenFlow protocol and flow table, the switching device and the controller both cannot identify content that has undergone tunnel encapsulation and is in the data packet that has undergone tunnel encapsulation processing.

The following clearly and completely describes the technical solutions in the embodiments of the present invention with reference to the accompanying drawings in the embodiments of the present invention. Evidently, specific embodiments described in the following are merely part of embodiments of the present invention, and for a person skilled in the art, the embodiments of the present invention may further be implemented by other embodiments that does not stick to these specific details.

As shown in FIG. 1 (1), Embodiment 1 of the present invention provides a flow identification method. The method includes the following content.
S11: A switching device acquires an enhanced flow table entry matching tunnel encapsulation, where the enhanced flow table entry matching the tunnel encapsulation includes an identifier of the tunnel encapsulation and a flow-table-field matching the tunnel encapsulation.
S12: The switching device identifies, according to the enhanced flow table entry matching the tunnel encapsulation, a data packet that has undergone tunnel encapsulation processing.

The tunnel encapsulation refers to re-encapsulating a datagram of another protocol in a datagram of another protocol. The tunnel encapsulation may include: Internet protocol (Internet Protocol in English, IP for short) tunnel encapsulation, medium access control (Medium Access Control in English, MAC for short) tunnel encapsulation, virtual local area network (Virtual Local Area Network in English, VLAN for short) tunnel encapsulation, multi-protocol label switching (Multi-Protocol Label Switching in English, MPLS for short) tunnel encapsulation, transmission control protocol (Transmission Control Protocol in English, TCP for short) tunnel encapsulation, user datagram protocol (User Datagram Protocol in English, UDP for short) tunnel encapsulation, stream control transmission protocol (Stream Control Transmission Protocol in English, SCTP for short) tunnel encapsulation, Internet control message protocol (Internet Control Message Protocol in English, ICMP for short) tunnel encapsulation, or the like.

In the embodiment of the present invention, the "matching the tunnel encapsulation" means that the switching device can compare, in a field-by-field manner, the enhanced flow table entry (specifically the flow-table-field in the enhanced flow table entry) with the data packet that has undergone the tunnel encapsulation processing, so that the switching device may not only identify a data packet that has not undergone tunnel encapsulation processing and is in the data packet, but also may identify packet content that has undergone tunnel encapsulation technology processing and is in the data packet, and executes an operation (for example, forwarding the data packet to a designated port) defined in the enhanced flow table entry.

The identifier of the tunnel encapsulation in the embodiment of the present invention is used to instruct the switching device whether to identify packet content that has undergone the tunnel encapsulation processing and is in the data packet. The identifier of the tunnel encapsulation may be a symbol, a digit, a field, or the like. For example, a designated identifier may be defined: When an identifier of the tunnel encapsulation is "1", the switching device needs to identify packet content that has undergone the tunnel encapsulation processing and is in the data packet; and when an identifier of the tunnel encapsulation is "0", the switching device does not need to identify packet content that has undergone the tunnel encapsulation and is in the data packet. For another example, the following may also be defined: When an identifier of the tunnel encapsulation is "1", the switching device is instructed to identify packet content that has undergone IP tunnel encapsulation and is in the data packet, and correspondingly, the flow-table-field matching the tunnel encapsulation corresponds to the IP tunnel encapsulation; when an identifier of the tunnel encapsulation is "2", the switching device is instructed to identify packet content that has undergone MAC tunnel encapsulation and is in the data packet, and correspondingly, the flow-table-field matching the tunnel encapsulation corresponds to the MAC tunnel encapsulation; when an identifier of the tunnel encapsulation is "3", the switching device is instructed to identify packet content that has undergone TCP tunnel encapsulation and is in the data packet, and correspondingly, the flow-table-field matching the tunnel encapsulation corresponds to the TCP tunnel encapsulation; and when an identifier of the tunnel encapsulation is "0", the switching device is instructed to not need to identify packet content that has undergone tunnel encapsulation and is in the data packet or to identify packet content that has not undergone tunnel encapsulated and is in the data packet. Here, when the designated identifier is "1", "2", or "3", it may be called that the enhanced flow table entry matching the tunnel encapsulation is done, and when the identifier of the tunnel encapsulation is "0", it may be called that the identifier of the tunnel encapsulation is undone. That the identifier of the tunnel encapsulation is done or the identifier of the tunnel encapsulation is undone may be set as required, which is not limited in the present invention.

As an example, it is assumed that the data packet received by the switching device includes packet content that has undergone IP tunnel encapsulation processing, the switching device needs to include a flow table entry matching the IP tunnel encapsulation, that is, the enhanced flow table entry described in the embodiment of the present invention, where the enhanced flow table entry includes an identifier of the IP tunnel encapsulation and a flow-table-field matching the IP tunnel encapsulation. When the identifier of the IP tunnel encapsulation is done, the switching device compares the flow-table-field matching the IP tunnel encapsulation with the packet content that has undergone the IP tunnel encapsulation processing and is in the data packet, and executes an operation defined in the enhanced flow table entry matching the IP tunnel encapsulation, so as to complete identification of the data packet that has undergone the IP tunnel encapsulation.

A flow table is formed of multiple flow table entries, and each flow table entry is a forwarding rule. A flow table entry is formed of multiple flow-table-fields, and each flow-table-field corresponds to content of a different data packet in a field-by-field manner. A data packet flowing through the switching device matches a corresponding flow table entry in a flow table (or corresponds to a flow-table-field in the flow table entry in a field-by-field manner), and the switching device may acquire a destination port for forwarding or execute another defined operation. Because a data packet received by the switching device includes packet content that has undergone tunnel encapsulation processing, the enhanced flow table entry described in the embodiment of the present invention further includes, in the flow table entry, the identifier of the tunnel encapsulation and the flow-table-field matching the tunnel encapsulation (hereinafter referred to as flow table entry matching non-tunnel encapsulation). The identifier of the tunnel encapsulation indicates, through specific data, a specific symbol, or a specific field, whether identification needs to be performed on content that has undergone tunnel encapsulation and is in the data packet that has undergone the tunnel encapsulation processing. By taking IP tunnel encapsulation as an example, the enhanced flow table entry may have, but is not limited to, the following two implementation manners:
(1) As an example, as shown in FIG. 1 (2), the enhanced flow table entry adds the identifier of the IP tunnel encapsulation and the flow-table-field matching the IP tunnel encapsulation to the flow table entry matching the non-tunnel encapsulation. For example, the identifier of the IP tunnel encapsulation may be marked as "Tunnel inspected"; and the flow-table-field matching the IP tunnel encapsulation may include an IP source address of the tunnel encapsulation (Tunnel IP Source), an IP destination address of the tunnel encapsulation (Tunnel IP dst), an IP protocol of the tunnel encapsulation (Tunnel IP proto), an IP service type of the tunnel encapsulation (Tunnel IP Tos), and so on. When the identifier of the IP tunnel encapsulation isdone, that is, the "Tunnel inspected" in FIG. 1 (2) is a designated identifier, it indicates that the switching device needs to use the flow-table-field matching the IP tunnel encapsulation to identify IP packet content that has undergone the IP tunnel encapsulation processing and is in the data packet. When the identifier of the IP tunnel encapsulation isundone, it indicates that the switching device does not need to use the flow-table-field matching the IP tunnel encapsulation, and the switching device may use an original IP flow-table-field in the flow table entry matching the non-tunnel encapsulation in the enhanced flow table entry to identify content of the data packet.
(2) As another example, as shown in FIG. 1 (3), the enhanced flow table entry adds the identifier of the IP tunnel encapsulation to the flow table entry matching the non-tunnel encapsulation and multiplex an original IP flow-table-field in the flow table entry matching the non-tunnel encapsulation. When the identifier of the IP tunnel encapsulation isdone, it indicates that the original IP flow-table-field in the flow table entry matching the non-tunnel encapsulation is the flow-table-field matching the IP tunnel encapsulation, and the switching device identifies, according to the IP flow-table-field, IP packet content of the data packet that has undergone the IP tunnel encapsulation processing. When the identifier of the IP tunnel encapsulation isundone, the switching device uses the original IP flow-table-field in the flow table entry matching the non-tunnel encapsulation to identify IP packet content of the data packet.

A controller may decide, according to a processing policy, what the identifier of the tunnel encapsulation is, whether the identifier is done, and how to set the identifier that is done.

The concept and process described in Embodiment 1 of the present invention are applicable to the following. Unless particularly specified, the concept and process are not repeatedly described.

Because in the embodiment of the present invention, the data packet received by the switching device includes the packet content that has undergone the tunnel encapsulation processing, and the flow table entry matching the non-tunnel encapsulation does not include a field that is capable of identifying the packet content that has undergone the tunnel encapsulation processing, in the embodiment of the present invention, on the basis of the flow table entry matching the non-tunnel encapsulation, the flow-table-field that matches the tunnel encapsulation and may be used to identify the packet content that has undergone the tunnel processing is added, and the flow-table-field has a corresponding field which is capable of identifying the packet content that has undergone the tunnel encapsulation processing. For a problem that the OpenFlow protocol and the flow-table-field cannot support identification of content that has undergone tunnel encapsulation and is included in a service flow data packet, the embodiment of the present invention provides the flow identification method, so that the switching device that supports the OpenFlow protocol can identify content that has undergone tunnel encapsulation and is in the service flow data packet, thereby enhancing an application scope of an OpenFlow control protocol and executing a more accurate control manner. Characteristics of the embodiment of the present invention are that the OpenFlow control protocol and the flow-table-field are enhanced, and the switching device that supports the OpenFlow may find, during packet matching, information of matched content that has undergone tunnel encapsulation, so as to complete identification of the content that has undergone tunnel encapsulation and is in the data packet that has undergone the tunnel encapsulation processing.

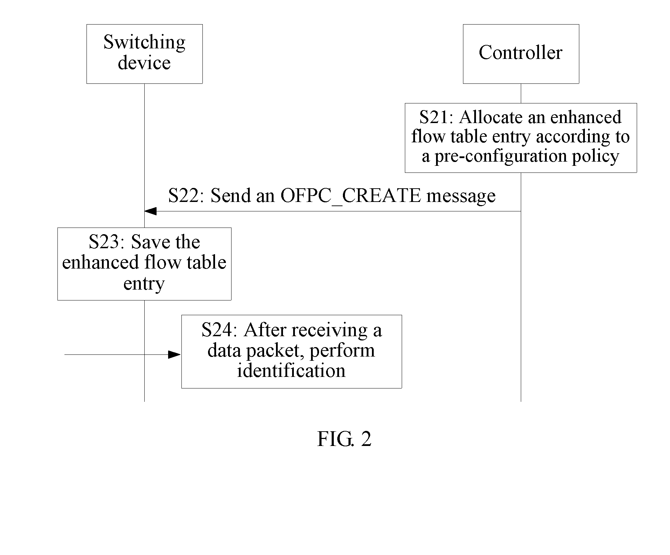

As shown in FIG. 2, Embodiment 2 of the present invention provides a flow identification method. The method provides specific details for the method according to Embodiment 1 of the present invention. The method gives a specific example that a switching device acquires an enhanced flow table entry matching tunnel encapsulation. The example includes the following content.
S21: A controller allocates, according to a pre-configuration policy, an enhanced flow table entry matching tunnel encapsulation.

As an example, the pre-configuration policy may be: In a system formed of the controller and a switching device, in a case that most of data packets received by the switching device include packet content that has undergone IP tunnel encapsulation processing, the controller may pre-allocate an enhanced flow table entry matching IP tunnel encapsulation to the switching device for saving, so that the switching device does not need to re-acquire, through the controller, the enhanced flow table entry matching the tunnel encapsulation each time after receiving a data packet, thereby saving system resources.
S22: The controller sends an OFPC_CREATE (flow table entry creation) message to the switching device, where the OFPC_CREATE message carries the enhanced flow table entry that matches the tunnel encapsulation and is allocated by the controller.
S23: After receiving the enhanced flow table entry that matches the tunnel encapsulation and is allocated by the controller, the switching device saves the enhanced flow table entry.
S24: When receiving a data packet, the switching device uses the installed enhanced flow table entry to identify content of the data packet.

Because the switching device identifies the received data packet according to the enhanced flow table entry that matches the tunnel encapsulation and is pre-allocated by the controller, before the switching device receives the data packet, the switching device saves an enhanced flow table entry which is capable of matching a data packet that has undergone tunnel encapsulation processing, so that it can be seen that Embodiment 2 of the present invention is applicable to a situation that a specific switching device receives a specific data packet. By applying the technical solution provided by Embodiment 2 of the present invention, in a situation that a specific switching device receives a specific data packet, a procedure for the switching device to acquire the enhanced flow table entry matching the tunnel encapsulation may be simplified, so as to identify content that has undergone tunnel encapsulation in the data packet that has undergone the tunnel encapsulation processing.

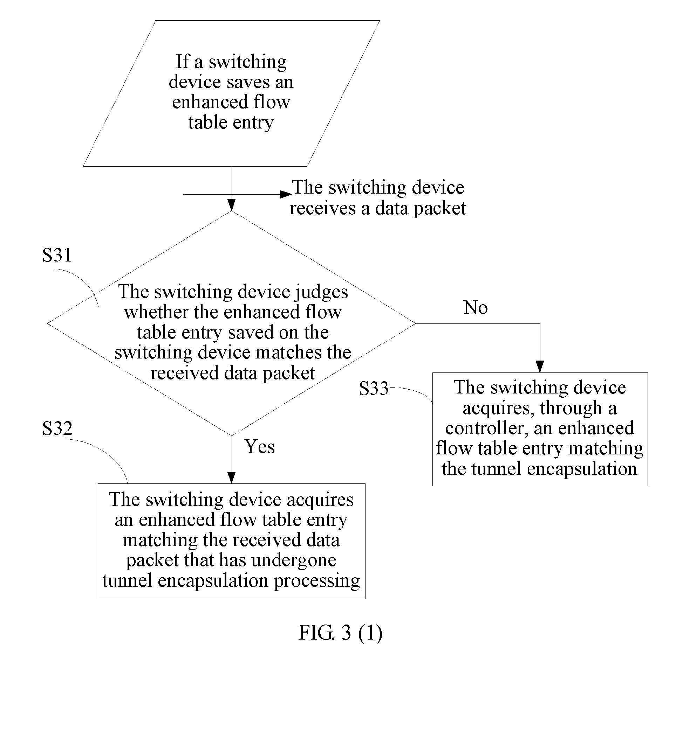

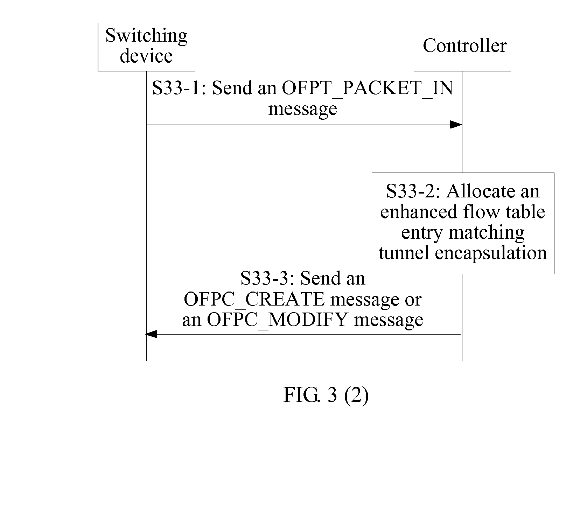

As shown in FIG. 3 (1), Embodiment 3 of the present invention provides a flow identification method. The method provides specific details for the methods according to Embodiment 1 and Embodiment 2 of the present invention. The method gives a specific example that a switching device acquires an enhanced flow table entry matching tunnel encapsulation. The example includes the following content.
S31: A switching device saves an enhanced flow table entry, where a saving process may be S21, S22, and S23 in Embodiment 2 of the present invention. The switching device compares, in a field-by-field manner, the enhanced flow table entry installed on the switching device with a data packet that has undergone tunnel encapsulation processing and judges whether the enhanced flow table entry matches the data packet. Optionally, if the enhanced flow table entry is not installed on the switching device, the procedure proceeds to step S33.

If the switching device saves an enhanced flow table entry, the enhanced flow table entry saved in the switching device may be allocated through a controller according to a pre-configuration policy. The controller may carry the enhanced flow table entry in an OFPC_CREATE (flow table entry creation) message and sends the message to the switching device.
S32: If the enhanced flow table entry matches the data packet, the switching device acquires an enhanced flow table entry matching the data packet that has undergone the tunnel encapsulation processing. In a situation that the enhanced flow table entry matches the data packet, the enhanced flow table entry matching the data packet that has undergone the tunnel encapsulation processing is the enhanced flow table entry matching the tunnel encapsulation.
S33: If the enhanced flow table entry does not match the data packet, the switching device acquires, through the controller, the enhanced flow table entry matching the tunnel encapsulation.

As an implementation manner, as shown in FIG. 3 (2), in step S33, the switching device acquires, through the controller, the enhanced flow table entry matching the tunnel encapsulation, which specifically includes:
S33-1: The switching device sends the data packet that has undergone the tunnel encapsulation processing to the controller, where the data packet that has undergone the tunnel encapsulation processing is carried in an OFPT_PACKET_IN (flow table entry packet input) message.
S33-2: The controller allocates, according to the received data packet that has undergone the tunnel encapsulation processing, the enhanced flow table entry matching the tunnel encapsulation.
S33-3: The controller carries the enhanced flow table entry that matches the tunnel encapsulation and is allocated by the controller in the OFPC_CREATE (flow table entry creation) message or an OFPC_MODIFY (flow table entry modification) message and sends the message to the switching device.
S33-4: The switching device receives the enhanced flow table entry that matches the tunnel encapsulation and is sent by the controller.

By applying the technical solution provided by Embodiment 3 of the present invention, which is not limited to a specific switching device, the switching device may acquire the enhanced flow table entry matching the tunnel encapsulation, and match, according to an identifier of the tunnel encapsulation and a flow-table-field matching the tunnel encapsulation in the enhanced flow table entry, the enhanced flow table entry with packet content that has undergone tunnel encapsulation and is in the data packet, thereby identifying content that has undergone the tunnel encapsulation processing and is in the data packet. The solution provided by Embodiment 3 of the present invention enhances an application scope of an OpenFlow control protocol, and executes a more accurate control manner. Characteristics of the embodiment of the present invention are that the OpenFlow control protocol and the flow-table-field are enhanced, and the switching device that supports the OpenFlow may find, during packet matching, information of matched content that has undergone tunnel encapsulation, so as to complete identification of the content that has undergone tunnel encapsulation and is in the data packet that has undergone the tunnel encapsulation processing.

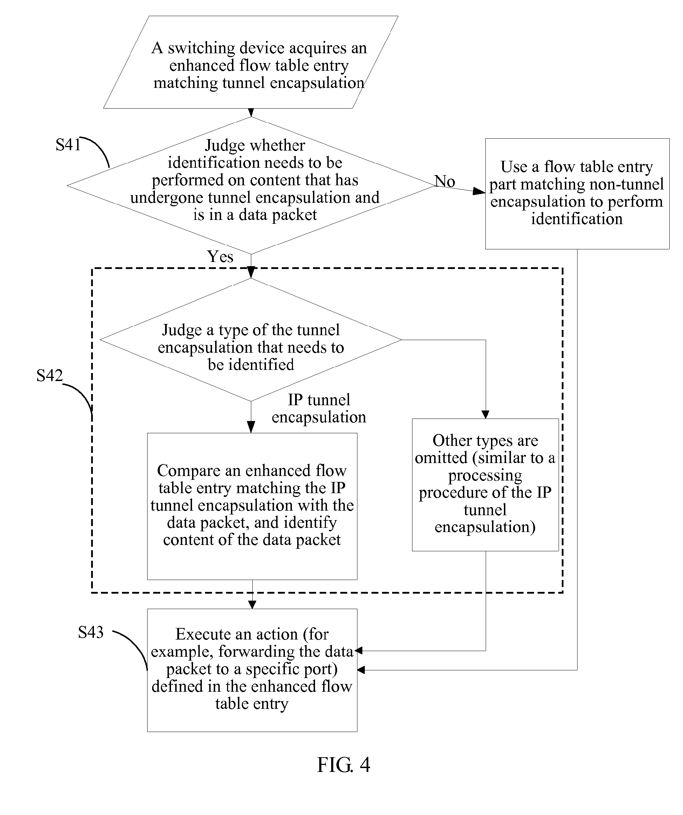

As shown in FIG. 4, Embodiment 4 of the present invention provides a flow identification method. The method provides specific details about how a switching device identifies, according to an enhanced flow table entry matching tunnel encapsulation, a data packet that has undergone tunnel encapsulation processing after the enhanced flow table entry matching the tunnel encapsulation is acquired in the method according to any one of Embodiment 1 to Embodiment 3 of the present invention. As a specific implementation manner, the following content is included.
S41: A switching device judges, according to an identifier of tunnel encapsulation, whether an enhanced flow table entry matching the tunnel encapsulation is done. The identifier of the tunnel encapsulation indicates, through specific data, a specific symbol, or a specific field, whether identification needs to be performed on content that has undergone tunnel encapsulation and is in a data packet that has undergone tunnel encapsulation processing.

If the enhanced flow table entry is done, it indicates that the switching device needs to identify the content that has undergone the tunnel encapsulation and is in the data packet that has undergone the tunnel encapsulation processing and execute step S42; and if the enhanced flow table entry is undone, it indicates that the switching device does not need to identify the content that has undergone the tunnel encapsulation and is in the data packet that has undergone the tunnel encapsulation processing, and the switching device may use a flow table entry part matching non-tunnel encapsulation to identify the data packet.
S42: The switching device judges, according to the identifier of the tunnel encapsulation or a flow-table-field matching the tunnel encapsulation, a type of the tunnel encapsulation, compares the data packet that has undergone the tunnel encapsulation processing with the enhanced flow table entry matching the tunnel encapsulation, and identifies content of the data packet. As an example, it is assumed that the type of the tunnel encapsulation is MAC tunnel encapsulation, the switching device compares, in a field-by-field manner, a flow-table-field matching the MAC tunnel encapsulation with packet content that has undergone the MAC tunnel encapsulation and is in the data packet, and compares a packet content part that has not undergone the MAC tunnel encapsulation and is in the data packet with a flow table entry part of non-tunnel encapsulation in the enhanced flow table entry.
S43: The switching device executes an operation defined in the enhanced flow table entry. For example, the data packet is forwarded to a designated port, or the data packet is discarded.

In Embodiment 4 of the present invention, for details about how the switching device judges, according to the identifier of the tunnel encapsulation, whether the switching device needs to identify packet content that has undergone tunnel encapsulation and is in the packet content, reference may be made to Embodiment 1 of the present invention.

By applying the technical solution provided by Embodiment 4 of the present invention, the switching device may acquire the enhanced flow table entry matching the tunnel encapsulation, match, according to the identifier of the tunnel encapsulation and the flow-table-field matching the tunnel encapsulation in the enhanced flow table entry, the enhanced flow table entry with packet content that has undergone tunnel encapsulation and is in the data packet, thereby identifying content that has undergone the tunnel encapsulation processing and is in the data packet, and executing the operation defined in the flow table entry. Embodiment 4 of the present invention enhances an application scope of an OpenFlow control protocol, and executes a more accurate control manner. Characteristics of Embodiment 4 of the present invention are that the OpenFlow control protocol and the flow-table-field are enhanced, and the switching device that supports the OpenFlow may find, during packet matching, information of matched content that has undergone tunnel encapsulation, so as to complete identification of the content that has undergone tunnel encapsulation and is in the data packet that has undergone the tunnel encapsulation processing.

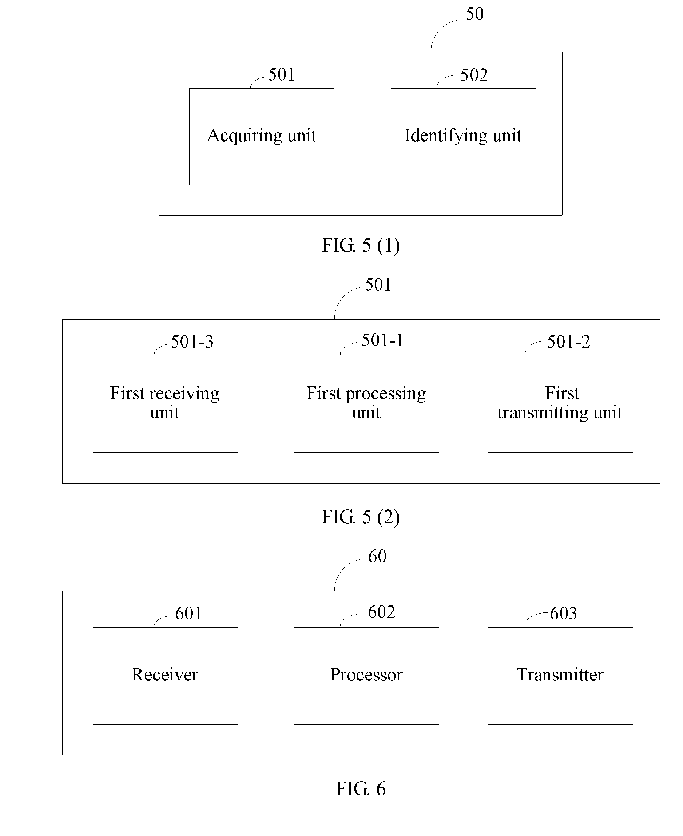

As shown in FIG. 5 (1), Embodiment 5 of the present invention provides a switching device for implementing flow identification, where the switching device 50 includes:
an acquiring unit 501, configured to acquire an enhanced flow table entry matching tunnel encapsulation, where the enhanced flow table entry matching the tunnel encapsulation includes an identifier of the tunnel encapsulation and a flow-table-field matching the tunnel encapsulation; and
an identifying unit 502, configured to identify, according to the enhanced flow table entry matching the tunnel encapsulation, a data packet that has undergone tunnel encapsulation processing. As an implementation manner, the identifying unit 502 is further configured to judge, according to the identifier of the tunnel encapsulation, whether the enhanced flow table entry matching the tunnel encapsulation is done. If the enhanced flow table entry is done, it indicates that the identifying unit 502 needs to identify content that has undergone tunnel encapsulation and is in the data packet that has undergone the tunnel encapsulation processing, and the identifying unit 502 is further configured to judge, according to the identifier of the tunnel encapsulation or the flow-table-field matching the tunnel encapsulation, a type of the tunnel encapsulation, compare the data packet that has undergone the tunnel encapsulation processing with the enhanced flow table entry matching the tunnel encapsulation, and compare packet content that has not undergone the tunnel encapsulation processing and is in the data packet with a flow table entry part of non-tunnel encapsulation in the enhanced flow table entry, so as to complete an identification process of the data packet, and execute an operation defined in the enhanced flow table entry. If the enhanced flow table entry isundone, it indicates that the identifying unit 502 does not need to identify the content that has undergone the tunnel encapsulation and is in the data packet that has undergone the tunnel encapsulation processing, and the identifying unit 502 may compare a flow table entry part matching non-tunnel encapsulation with the data packet, so as to identify content of the data packet, and execute an operation defined in the enhanced flow table entry.

As an implementation manner, as shown in FIG. 5 (2), the acquiring unit 501 further includes:
a first processing unit 501-1, configured to judge whether the switching device 50 has an enhanced flow table entry, where if the switching device 50 does not have an enhanced flow table entry, the first processing unit 501-1 is further configured to acquire, through a controller, the enhanced flow table entry matching the tunnel encapsulation, and if the switching device 50 saves an enhanced flow table entry, the first processing unit 501-1 is further configured to judge whether the enhanced flow table entry installed on the switching device matches the data packet that has undergone the tunnel encapsulation processing; and if the enhanced flow table entry matches the data packet, the first processing unit 501-1 is further configured to acquire the enhanced flow table entry matching the data packet that has undergone the tunnel encapsulation processing, and if the enhanced flow table entry does not match the data packet, the first processing unit 501-1 is further configured to acquire, through the controller, the enhanced flow table entry matching the tunnel encapsulation;
a first transmitting unit 501-2, configured to send the data packet that has undergone the tunnel encapsulation processing to the controller when the first processing unit 501-1 judges that the enhanced flow table entry installed on the switching device does not match the data packet that has undergone the tunnel encapsulation processing, where optionally, the data packet that has undergone the tunnel encapsulation processing is carried in an OFPT_PACKET_IN (flow table entry packet input) message; and
a first receiving unit 501-3, configured to receive the enhanced flow table entry that matches the tunnel encapsulation and is sent by the controller, where the enhanced flow table entry matching the tunnel encapsulation is allocated by the controller according to a pre-configuration policy or the received data packet that has undergone the tunnel encapsulation processing, and optionally, the enhanced flow table entry matching the tunnel encapsulation is carried in an OFPC_CREATE (flow table entry creation) message or an OFPC_MODIFY (flow table entry modification) message.

As another implementation manner, similar to FIG. 5 (2), the acquiring unit 501 includes:
a second processing unit, configured to judge whether the switching device has an enhanced flow table entry;
a second transmitting unit, configured to send the data packet that has undergone the tunnel encapsulation processing to a controller when the second processing unit judges that the switching device does not have an enhanced flow table entry; and
a second receiving unit, configured to receive the enhanced flow table entry that matches the tunnel encapsulation and is sent by the controller, where the enhanced flow table entry matching the tunnel encapsulation is allocated by the controller according to the received data packet that has undergone the tunnel encapsulation processing, and optionally, the enhanced flow table entry matching the tunnel encapsulation is carried in an OFPC_CREATE (flow table entry creation) message or an OFPC_MODIFY (flow table entry modification) message.

In two implementation manners of the acquiring unit 501 in Embodiment 5 of the present invention, the first processing unit and the second processing unit, the first transmitting unit and the second transmitting unit, the first receiving unit and the second receiving unit may be separately integrated together, so as to form entities that complete the foregoing functions; for example, the first processing unit and the second processing unit form a processing unit, so that the processing unit may not only complete a function of the first processing unit, but also complete a function of the second processing unit.

The switching device provided by Embodiment 5 of the present invention may execute the steps of the method according to any one of Embodiment 1 to Embodiment 4 of the present invention, and the process and concept that have been described in the method embodiments are not repeatedly described in Embodiment 5 of the present invention, and reference may be made to the method embodiments for details. Besides the acquiring unit 501 and the identifying unit 502, some structures may also be set in the switching device provided by Embodiment 5 of the present invention to implement actions executed by the switching device in the method embodiments. This kind of structures may include, but are not limited to, for example, a storage, a micro processor, a circuit for sending an electronic signal, and the like.

By using the switching device provided by Embodiment 5 of the present invention, the method steps of the method according to any one of the method Embodiment 1 to Embodiment 3 are executed. The switching device may acquire the enhanced flow table entry matching the tunnel encapsulation, match, according to the identifier of the tunnel encapsulation and the flow-table-field matching the tunnel encapsulation in the enhanced flow table entry, the enhanced flow table entry with packet content that has undergone tunnel encapsulation and is in the data packet, thereby identifying content that has undergone the tunnel encapsulation processing and is in the data packet, and executing an operation (for example, forwarding the data packet to a designated port, or discarding the data packet) defined in the flow table entry. Embodiment 5 of the present invention enhances an application scope of an OpenFlow control protocol, and executes a more accurate control manner. Characteristics of Embodiment 5 of the present invention are that the OpenFlow control protocol and the flow-table-field are enhanced, and the switching device that supports the OpenFlow may find, during packet matching, information of matched content that has undergone tunnel encapsulation, so as to complete identification of the content that has undergone tunnel encapsulation and is in the data packet that has undergone the tunnel encapsulation processing.

As shown in FIG. 6, Embodiment 6 of the present invention provides a controller 60, including:
a receiver 601, configured to receive a data packet that has undergone tunnel encapsulation processing and is sent by a switching device, where optionally, the data packet that has undergone the tunnel encapsulation processing is carried in an OFPT_PACKET_IN (flow table entry data input) message;
a processor 602, configured to allocate, according to the data packet that has undergone the tunnel encapsulation processing or a pre-configuration policy, an enhanced flow table entry matching the tunnel encapsulation, where the enhanced flow table entry matching the tunnel encapsulation includes an identifier of the tunnel encapsulation and a flow-table-field matching the tunnel encapsulation; and
a transmitter 603, configured to send the enhanced flow table entry matching the tunnel encapsulation to the switching device, where the enhanced flow table entry matching the tunnel encapsulation is carried in a flow table entry creation (OFPC_CREATE) message or a flow table entry modification (OFPC_MODIFY) message.

The controller provided by Embodiment 6 of the present invention may execute the steps of the method according to any one of Embodiment 1 to Embodiment 4 of the present invention, and the process and concept that have been described in the method embodiments are not repeatedly described in Embodiment 6 of the present invention. Besides the receiver 501 and the transmitter 502, some structures may also be set in the controller provided by Embodiment 6 of the present invention to implement actions executed by the controller in the method embodiments. This kind of structures may include, but are not limited to, for example, a storage, a micro processor, a circuit for sending an electronic signal, and the like.

By using the controller provided by Embodiment 6 of the present invention, and in cooperation with the switching device in Embodiment 5, the steps of the method according to any one of the method Embodiment 1 to Embodiment 4 may be executed, so as to complete, according to the identifier of the tunnel encapsulation and the flow-table-field matching the tunnel encapsulation, identification of the data packet that has undergone the tunnel encapsulation processing and execute an operation (for example, discarding the data packet or forwarding the data packet to a designated port) defined in the enhanced flow table entry. Embodiment 6 of the present invention enhances an application scope of an OpenFlow control protocol, and executes a more accurate control manner. Characteristics of Embodiment 6 of the present invention are that the OpenFlow control protocol and the flow-table-field are enhanced, and the switching device that supports the OpenFlow may find, during packet matching, information of matched content that has undergone tunnel encapsulation, so as to complete identification of the content that has undergone tunnel encapsulation and is in the data packet that has undergone the tunnel encapsulation processing.

Embodiment 7 of the present invention provides a system for implementing flow identification. The system includes: the switching device provided by Embodiment 5 and the controller provided by Embodiment 6. The system executes the method according to any one of Embodiment 1 to Embodiment 4 of the present invention, reference may be made to Embodiment 1 to Embodiment 4, and details are not repeatedly described here. Therefore, identification of a data packet that has undergone tunnel encapsulation processing may be implemented.

Embodiment 7 of the present invention provides a computer program product. The computer program product includes a storage medium, where the storage medium stores codes of the method according to any one of Embodiment 1 to Embodiment 4. By applying the computer program product, the method according to any one of Embodiment 1 to Embodiment 4 may be implemented, thereby implementing identification of a data packet that has undergone tunnel encapsulation processing.

In some embodiments, known methods, interfaces, and device signaling technologies are not described in detail, so that the present invention is not ambiguous due to unnecessary details. A person of ordinary skill in the art may understand that all or part of the steps of the method of the foregoing embodiments may be implemented by a program instructing relevant hardware. The program may be stored in a computer readable storage medium, and the storage medium may be, for example, a read-only memory (Read-Only Memory, ROM), a random access memory (Random Access Memory, RAM), a magnetic disk, or an optical disk.

The objectives, technical solutions, and beneficial effects of the present invention are described in detail in the foregoing specific implementation manners. It should be understood that, the foregoing description is merely specific implementation manners of the present invention, but is not intended to limit the protection scope of the present invention. Any modification, equivalent replacement, or improvement made by a person skilled in the art without creative efforts shall fall within the protection scope of the present invention.

## Claims

1. A flow identification method in an open flow system, comprising:
acquiring, by a switching device, an enhanced flow table entry matching tunnel encapsulation, wherein the enhanced flow table entry matching the tunnel encapsulation comprises an identifier of the tunnel encapsulation and a flow-table-field matching the tunnel encapsulation; and
identifying, by the switching device, according to the enhanced flow table entry matching the tunnel encapsulation, a data packet that has undergone tunnel encapsulation processing.

2. The method according to claim 1, wherein the acquiring, by the switching device, the enhanced flow table entry matching the tunnel encapsulation comprises:
if the switching device does not have an enhanced flow table entry, acquiring, by the switching device, through a controller, the enhanced flow table entry matching the tunnel encapsulation; or
if the switching device has an enhanced flow table entry, judging, by the switching device, whether the enhanced flow table entry in the switching device matches the data packet that has undergone the tunnel encapsulation processing,
if the enhanced flow table entry matches the data packet, acquiring, by the switching device, an enhanced flow table entry matching the data packet that has undergone the tunnel encapsulation processing, and
if the enhanced flow table entry does not match the data packet, acquiring, by the switching device through a controller, the enhanced flow table entry matching the tunnel encapsulation.

3. The method according to claim 2, further comprising:
receiving, by the switching device, an enhanced flow table entry allocated by the controller according to a pre-configuration policy.

4. The method according to claim 2 or 3, wherein the acquiring, by the switching device through the controller, the enhanced flow table entry matching the tunnel encapsulation comprises:
sending, by the switching device, the data packet that has undergone the tunnel encapsulation processing to the controller; and
receiving, by the switching device, the enhanced flow table entry matching the tunnel encapsulation, wherein the enhanced flow table entry matching the tunnel encapsulation is allocated by the controller according to the received data packet that has undergone the tunnel encapsulation processing.

5. The method according to claim 4, wherein the data packet that has undergone the tunnel encapsulation processing is carried in an OFPT_PACKET_IN (flow table entry packet input) message.

6. The method according to claim 4 or 5, wherein the enhanced flow table entry matching the tunnel encapsulation is carried in an OFPC_CREATE (flow table entry creation) message or an OFPC_MODIFY (flow table entry modification) message.

7. The method according to any one of claims 1 to 6, wherein the identifying, by the switching device, according to the enhanced flow table entry matching the tunnel encapsulation, the data packet that has undergone the tunnel encapsulation processing comprises:
when the switching device judges, according to the identifier of the tunnel encapsulation, that the enhanced flow table entry matching the tunnel encapsulation is done, comparing, by the switching device, in a field-by-field manner, the flow-table-field matching the tunnel encapsulation with content that has undergone tunnel encapsulation and is in the data packet that has undergone the tunnel encapsulation processing, so as to identify field content.

8. The method according to claim 7, further comprising:
judging, by the switching device, that the enhanced flow table entry matching the tunnel encapsulation is done when the identifier of the tunnel encapsulation is a designated identifier.

9. The method according to any one of claims 1 to 8, wherein the identifier of the tunnel encapsulation comprises any one or a combination of the following: a digit, a symbol, and a field.

10. A flow identification method, comprising:
receiving, by a controller, a data packet that has undergone tunnel encapsulation processing;
allocating, by the controller, according to the data packet that has undergone the tunnel encapsulation processing, an enhanced flow table entry matching the tunnel encapsulation, wherein the enhanced flow table entry matching the tunnel encapsulation comprises an identifier of the tunnel encapsulation and a flow-table-field matching the tunnel encapsulation; and
sending, by the controller, the enhanced flow table entry matching the tunnel encapsulation to a switching device.

11. The method according to claim 10, wherein the data packet that has undergone the tunnel encapsulation processing is carried in an OFPT_PACKET_IN (flow table entry packet input) message.

12. The method according to claim 10 or 11, wherein the enhanced flow table entry matching the tunnel encapsulation is carried in an OFPC_CREATE (flow table entry creation) message or an OFPC_MODIFY (flow table entry modification) message.

13. The method according to any one of claims 10 to 12, wherein the identifier of the tunnel encapsulation comprises any one or a combination of the following: a digit, a symbol, and a field.

14. A switching device for implementing flow identification, comprising:
an acquiring unit, configured to acquire an enhanced flow table entry matching tunnel encapsulation, wherein the enhanced flow table entry matching the tunnel encapsulation comprises an identifier of the tunnel encapsulation and a flow-table-field matching the tunnel encapsulation; and
an identifying unit, configured to identify, according to the enhanced flow table entry matching the tunnel encapsulation, a data packet that has undergone tunnel encapsulation processing.

15. The switching device according to claim 14, wherein the acquiring unit comprises:
a first processing unit, configured to judge that the switching device has an enhanced flow table entry, and judge whether the enhanced flow table entry in the switching device matches the data packet that has undergone the tunnel encapsulation processing, wherein if the enhanced flow table entry matches the data packet, the first processing unit is further configured to acquire an enhanced flow table entry matching the data packet that has undergone the tunnel encapsulation processing, and if the enhanced flow table entry does not match the data packet, the first processing unit is further configured to acquire, through a controller, the enhanced flow table entry matching the tunnel encapsulation;
a first transmitting unit, configured to send the data packet that has undergone the tunnel encapsulation processing to the controller when the first processing unit judges that the enhanced flow table entry in the switching device does not match the data packet that has undergone the tunnel encapsulation processing; and
a first receiving unit, configured to receive the enhanced flow table entry that matches the tunnel encapsulation and is sent by the controller, wherein the enhanced flow table entry matching the tunnel encapsulation is allocated by the controller according to the received data packet that has undergone the tunnel encapsulation processing.

16. The switching device according to claim 14, wherein the acquiring unit comprises:
a second processing unit, configured to judge whether the switching device has an enhanced flow table entry;
a second transmitting unit, configured to send the data packet that has undergone the tunnel encapsulation processing to a controller when the second processing unit judges that the switching device does not have an enhanced flow table entry, wherein optionally, the data packet that has undergone the tunnel encapsulation processing is carried in an OFPT_PACKET_IN (flow table entry packet input) message; and
a second receiving unit, configured to receive the enhanced flow table entry that matches the tunnel encapsulation and is sent by the controller, wherein the enhanced flow table entry matching the tunnel encapsulation is allocated by the controller according to the received data packet that has undergone the tunnel encapsulation processing.

17. The switching device according to any one of claims 14 to 16, wherein the identifying unit is further configured to, when the identifying unit judges, according to the identifier of the tunnel encapsulation, that the enhanced flow table entry matching the tunnel encapsulation is done, compare, in a field-by-field manner, the flow-table-field matching the tunnel encapsulation with content that has undergone tunnel encapsulation and is in the data packet that has undergone the tunnel encapsulation processing, so as to identify field content.

18. The switching device according to claim 17, wherein
the identifying unit is further configured to judge that the enhanced flow table entry matching the tunnel encapsulation is done when the identifier of the tunnel encapsulation is a designated identifier.

19. The switching device according to any one of claims 14 to 18, wherein the identifier of the tunnel encapsulation comprises any one or a combination of the following: a digit, a symbol, and a field.

20. A controller, comprising:
a receiver, configured to receive a data packet that has undergone tunnel encapsulation processing and is sent by a switching device;
a processor, configured to allocate, according to the data packet that has undergone the tunnel encapsulation processing, an enhanced flow table entry matching the tunnel encapsulation, wherein the enhanced flow table entry matching the tunnel encapsulation comprises an identifier of the tunnel encapsulation and a flow-table-field matching the tunnel encapsulation; and
a transmitter, configured to send the enhanced flow table entry matching the tunnel encapsulation to the switching device.

21. A system for implementing flow identification, comprising the switching device according to any one of claims 14 to 19 and the controller according to any one of claim 20.

22. A computer program product, comprising a storage medium, wherein the storage medium stores codes of the method according to any one of claims 1 to 13.
